# EUROPEAN PATENT APPLICATION

(11) **EP 4 209 427 A1**
(43) Date of publication of application: **12.07.2023**
(21) Application number: 22150793.2
(22) Date of filing: 10.01.2022
(51) Int. Cl.: B65D 5/20, B31B 50/25, B32B 29/08

(54) **CORRUGATED BLANK WITH CREASE GUIDE**

(71) Applicant: SCA Forest Products AB, 85188 Sundsvall (SE)
(72) Inventor: Hägglund, Rickard, 86234 Kvissleby (SE); Bodell, Mattias, 84331 Bräcke (SE)
(74) Representative: Weickmann & Weickmann PartmbB

(57) **Abstract**

A continuous blank (110) for forming a folded object (102 is made from a multi-layered board material (106) comprising a corrugated layer (103) defining a flute direction (F); the blank (110) comprising two blank portions (111, 112) joined to each other by a straight fold line (114) extending along the flute direction (F) and having two opposed fold line end points (116), the multi-layered board material (106) being weakened along the fold line (114); wherein a contour (110c) of the blank (110) comprises two recessed contour portions (118), each recessed contour portion (118) comprising one of the end points (116) and extending on both sides of the fold line (114).

## Description

### FIELD OF THE INVENTION

The present invention relates to the field of blanks for forming folded objects made from a corrugated multi-layered board material, in particular for forming packaging boxes.

More precisely, the present invention relates to a blank with the features of the preamble part of claim 1, that is to a blank for forming a folded object, wherein the blank is made from a multi-layered board material comprising a corrugated layer defining a flute direction, the blank comprising two blank portions joined to each other by a straight fold line extending along the flute direction and having two opposed fold line end points, the multi-layered board material being weakened along the fold line.

### BACKGROUND

Corrugated multi-layered board materials have many advantages including versatility, stability, low weight, low cost and recyclability. They are thus widely used, in particular for packaging or presentation purposes.

When folding a flat, multi-layered corrugated board to create a three-dimensional object, it is necessary to weaken the sandwich construction of the board at a position and along a direction where the folding is to appear. This can be achieved by a crease rule usually integrated with the die cutting tool for producing the corresponding blank. The crease rule is pressed on an inside liner layer of the board creating an inward bend on the fluting that will act as a hinge.

This technique often works well for fold lines extending across the flute direction but can pose a challenge for fold lines extending along the flute direction since the corrugated board sandwich design is weaker alongside the flute direction and can be bent unintentionally between the tips of adjacent flute pipes.

In an attempt to prevent unintentional bending and to guide the folding along the flute direction, there are different techniques to increase the weakening of the corrugated board for a more exact folding such as providing a perforated line on the outer liner layer. Depending on board grade and box design, the results vary. When, for example, using thinner paper grades on the inner liner layer, the problem becomes more noticeable. If the crease hits directly on top of a flute pipe, the resulting folding might appear half on one side and half on the other side of the flute top, creating a crooked folding and a skew folded object. This is especially relevant when machine erecting for example wrap around boxes. When using e.g. Arcwise^{™} corrugated board that uses a thinner inner liner than conventional corrugated board, in an older erecting machine that is made for 90 degree angled boxes, a smooth bending instead of the desired distinct folding can occur if the crease is not made correct.

Incorrect folding cannot achieve packaging boxes of accurate dimensions. This creates several drawbacks in the service-life of the resulting boxes. It disturbs the erecting and filling operation in the packaging machine and thereby reduces productivity. It can also cause the boxes to perform unsatisfactorily during transport and handling and may lead e.g. to the collapse of stacks of boxes loaded on pallets. Lastly, it also alters the visual impression of the packaging.

### BRIEF SUMMARY OF THE INVENTION

Against this background, it is an object of the present invention to provide an improved blank which can be reliably folded with a higher degree of precision along a desired fold line extending along the flute direction of the corrugated layer of the material.

This objective is solved by a blank with the features of claim 1. Accordingly, the invention relates to a continuous blank for forming a folded object, wherein the blank is made from a multi-layered board material comprising a corrugated layer defining a flute direction; the blank comprising two blank portions joined to each other by a straight fold line extending along the flute direction and having two opposed fold line end points, the multi-layered board material being weakened along the fold line; characterized in that a contour of the blank comprises two recessed contour portions, each recessed contour portion comprising one of the end points and extending on both sides of the fold line. Preferred embodiments are described in the dependent claims.

According to the invention, a contour of the blank comprises two recessed contour portions, each recessed contour portion comprising one of the end points and extending on both sides of the fold line.

The multi-layered board material can comprise an uncorrugated first liner layer being joined to a first surface of the corrugated layer, wherein the first liner layer can be weakened along the fold line, preferably by an indented score line.

As an example, the blank may be configured to be folded into a packaging box, the first liner layer preferably being an inner liner layer configured to form an interior surface of the packaging box.

The two recessed contour portions can be arranged and formed symmetrically to each other.

As an alternative or an addition, at least one of the two recessed contour portions can be symmetric with respect to the fold line.

In particular, at least one of the recessed contour portions may be wedge-shaped and may particularly have a rounded apex region.

It may be provided that a recess width perpendicular to the fold line of each recessed contour portion is not larger than 10 mm.

According to an embodiment, at least one of the two recessed contour portions may have a curve radius at the associated fold line end point of between 0.8 mm and 2.5 mm, particularly of about 2 mm.

At least one of the two recessed contour portions may have a recess length extending parallel to the fold line and a recess width extending perpendicular to the fold line in a plane defined by the blank in an unfolded state, wherein the recess length is from 2 mm to 15 mm, particularly from 1.5 mm to 10 mm, more particularly from 3 mm to 6 mm. As an alternative or an addition, the recess width may be from 3 mm to 8 mm.

A ratio of the recess length to the recess width may be between 3:1 to 3:5, particularly approximately 3:4.

In particular, at least one of the two recessed contour portions may have a recess length extending parallel to the fold line, wherein a ratio of the recess length to a flute height of the corrugated layer may be between 1.6 and 6.5, particularly between 1.8 and 2.2, more particularly approximately 2.

It can be provided that the multi-layered material further comprises an uncorrugated second liner layer joined to a second outer surface of the corrugated layer, wherein a thickness of the first liner layer is smaller than a thickness of the second liner layer and/or wherein a bending stiffness according to ISO 5628 is lower for the first liner layer than for the second liner layer.

In certain preferred embodiments, in particular for a packaging box as the folded object, one of the two blank portions may be a side flap portion, particularly a short side flap portion and the other one may be a wall portion, wherein the contour of the blank in regions of the wall portion immediately adjacent the recessed contour portions is smoothly curved.

Protection is also claimed for a folded packaging box made from a blank according to the invention as described above.

Particularly, a at least one side wall of the box may be curved and/or at least one edge of the box may be rounded.

In particular, the box may be a wraparound box.

### DETAILED DESCRIPTION OF THE INVENTION

As mentioned hereinabove, the present invention relates to an improved blank which can be reliably folded with a higher degree of precision along a desired fold line extending along the flute direction of the corrugated layer of the material.

The inventors have found that a pair of recessed contour portions extending on both sides of the fold line around the end points thereof effectively guides the folding process and considerably enhances the achievable folding precision.

The idea originates from how stresses are distributed in a body upon loading. Irrespective on how forces are applied, a local stress concentration will appear in the vicinity of crack shaped parts of the body and the folding will automatically follow the fold line as a consequence of the initial elevated stress in this region.

According to some embodiments, the multi-layered board material furthermore comprises an uncorrugated first liner layer being joined, for example by laminating and/or glueing, to a first surface of the corrugated layer, wherein the first liner layer is weakened along the fold line, preferably by an indented score line forming a hinge for folding.

The corrugated layer is typically manufactured in a corrugating machine, in which a sheet material such as paper, known as the fluting medium, with a typical grammage in the range of 80-200 g/m², in particular about 115 g/m², is corrugated to a wave shaped pattern. There are many standard formats differing in the length and/or height of the typically sine shaped waves (corrugated flutes). Common standard flute profiles are N, E, B, C, K, A-flute and the like. Also recycled fluting can be used. In certain preferred embodiments, the corrugated layer is recycled paper fluting, such as recycled fluting of 115 g/m².

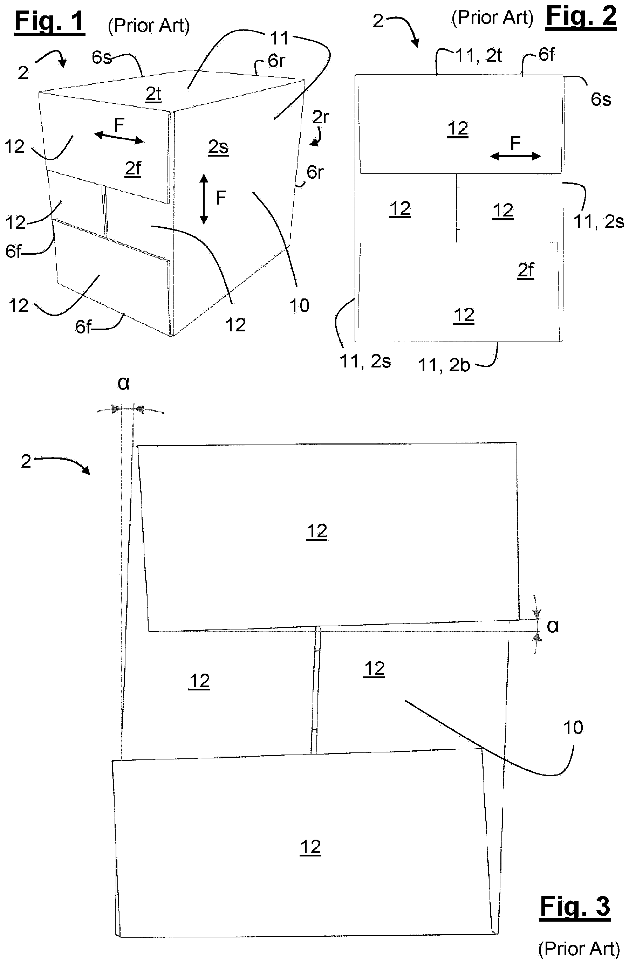

Definitions of the standard flute profiles are given in for example, to Chapter 3, Figures 3.1, 3.2 and 3.3 of "Mechanics of paper products", edited by Niskanen K., pub. Walter de Gruyter GmbH 2012, ISBN: 9783110254617, the contents of which Figures are hereby incorporated by reference to the extent permitted by law. In particular, the flute heights and wave lengths of the corrugated layer of some common flute profiles as defined in this book are summarized below.

| flute profile | flute wave length (mm) | flute height (mm) |
|---|---|---|
| F | 2.3 - 2.5 | 0.7 - 0.8 |
| E | 3.2 - 3.6 | 1.0 - 1.8 |
| C | 7.1 - 8.3 | 3.2 - 3.9 |
| B | 6.1 - 6.9 | 2.2 - 3.0 |
| A | 8.3 - 10.0 | 4.0 - 4.8 |

Other materials and forms for the corrugated layer are also possible as long as the resulting layer defines a flute direction, i.e. the direction of the corrugated pipes of the material. For example paper, carton board, fiberboard, plastic or a laminate of any two or more of these materials can be used.

The corrugated layer may also consist of some other suitable core material such as a thermoformed structured core, containing cavities. The thermoformed core may form a continuous middle layer or it may form a middle layer where the thermoformed core material is present intermittently between the first and second layers. The thermoformed core may for instance be made of plastics or a cellulose-based material.

In this context, the term multi-layered means that the material comprises at least one further layer, e.g. the first liner layer mentioned above, in addition to the corrugated layer. In particular, the material can comprise at least three layers, e.g. two liner layers provided on both sides of the corrugated layer and forming outer surfaces of the multi-layered material. It is also possible that the multi-layered material comprises several corrugated layers. Between adjacent corrugated layers, an intermediate uncorrugated layer can be interposed.

The material of the uncorrugated layers, i.e. of the first liner layer and/or the second liner layer and/or an intermediate uncorrugated layer can be paper, carton board, fiberboard, plastic or a laminate of any two or more of these materials. In particular, coated Kraft liner or coated mechanical pulp paper can be used.

According to an embodiment, the multi-layered board material can consist of a corrugated middle layer, a first liner layer and a second liner layer joined, for example by glueing and/or laminating, to opposing surfaces of the corrugated layer. In particular, the first (inner) liner layer can be made from a coated mechanical pulp paper and the second (outer) liner layer can be made from a coated Kraft liner which has a higher grammage than the material of the first (inner) liner layer. As an example, the grammage of the second liner layer can be at least three times as large as the grammage of the first liner layer.

In particular, the uncorrugated layers may be made up of one of a fine paper, supercalendered paper, machine-glazed paper, greaseproof paper, newsprint or machine-finished paper, liner, metal foil, metalized film or a composite material or a laminate of any two or more of a fine paper, supercalendered paper, machine-glazed paper, greaseproof paper, newsprint or machine-finished paper, liner, metal foil, metalized film or a composite material such as cellulose fibre reinforced polymers (e.g. including nano-cellulose).

In certain embodiments, the multi-layered board material may be a cardboard material. In certain preferred embodiments, an Arcwise^{™} material can be used.

The folded object can be any object, in particular any three-dimensional object, folded from the blank.

An important purpose for those blanks is folding packaging boxes. Therefore, according to some embodiments of the invention, the blank is configured to be folded into a packaging box, the first liner layer preferably being an inner liner layer configured to form an interior surface of the packaging box.

The packaging box can have any desired shape, e.g. the shape of a cube, a cuboid, a prism, a polyhedron or a shape composed of two or more of these elements. It may have an integrated lid or may be configured to be closed by a separate lid. Some or all of the edges of the packaging box may be sharp edges. At least some edges may be rounded.

However, of course other uses or other types of folded objects are possible, for example three-dimensional advertising material, cardboard furniture etc.

Depending on the form of the folded object, the blank can have several folding lines extending in different directions with respect to the flute direction. Preferably, the blank contour is provided at least for each folding line extending along the flute direction with a pair of recessed contour portions extending on both sides of the respective folding line around the end points thereof.

In most cases, such recessed contour portions are not necessary for those folding lines that are perpendicular to the flute direction.

However, for some purposes, it might be desired that the blank contour is provided for each folding line, irrespective of its orientation, with such a pair of recessed contour portions.

The recessed contour portions can be made as cutouts, preferably with the same die cutting tool which is used to form the rest of the blank so that the blank including the cutouts can most preferably be made in a single processing step. In particular, the cutouts may be realized by means of a modified crease rule integrated with the die cutting tool.

The effort in producing this cutting tool can be reduced when the two recessed contour portions are arranged and formed symmetrically to each other.

Making at least one of the two recessed contour portions, preferably both of them, symmetric with respect to the fold line can help in centering the fold.

According to some embodiments, at least one of the recessed contour portions, preferably each of them, may be wedge-shaped and preferably has a rounded, in particular semi-circular apex region as this shape has proven to guide the folding effectively in experiments performed by the applicant.

The apex region is a middle region of the recessed contour portion comprising the associated end point of the fold line. Outer regions of the recessed contour portions provided on both sides of the apex region may converge while approaching the apex region in order to form a wedge-shape. In particular, the outer regions of the recessed contour portions may be approximately linear.

In the following, the recess width is understood as referring to the dimension of the corresponding recessed contour portion extending perpendicular to the fold line in the plane defined by the unfolded blank, and the recess length is understood as the dimension of the corresponding recessed contour portion extending along the fold line.

It has been found that the recessed contour portions act most effectively as crease guides for most board materials when the recess width is not larger than about 10 mm.

According to some embodiments of the invention, at least one of the two recessed contour portions, preferably each of the two recessed contour portions, has a curve radius at the associated fold line end point of between 0.8 mm and 2.5 mm, particularly of between 1 mm and 2.2 mm, more particularly of about 2 mm.

In this manner, the radius is large enough so that the liner layer does not tend to tear at the fold line and so that paper waste can be removed after cutting without too much difficulty. On the other hand, it is small enough so that the recessed contour portions actually act as a crease guide.

According to the inventors' experiments and experience, the recess length may be from 2 mm to 15 mm, particularly from 1.5 mm to 10 mm, more particularly from 3 mm to 6 mm

In addition or as an alternative, the recess width may for example be from 3 mm to 8 mm.

A ratio of the recess length to the recess width can for example be between 3:1 to 3:5, preferably approximately 3:4.

The dimensions of the recessed contour portions, in particular the recess length and/or the curvature radius at the associated fold line end point can vary with varying board thickness, flute height and/or the size of the resulting folded object.

According to some embodiments of the invention, a ratio of the recess length to a flute height of the corrugated layer can be between 1.6 and 6.5, preferably between 1.8 and 2.2, more preferably approximately 2.

The blanks according to the invention can be advantageously used for folding objects with rounded edges, in particular boxes with rounded edges, as for this purpose, it is extremely important that the blank can be folded with high precision.

According to a particular example, the multi-layered material may further comprise an uncorrugated second liner layer joined to a second outer surface of the corrugated layer, wherein a thickness of the first liner layer is smaller than a thickness of the second liner layer and/or wherein a bending stiffness according to ISO 5628 is lower for the first liner layer than for the second liner layer. Such a material is especially suitable for folding objects with rounded edges, as explained in more detail in WO 2016/066220 A1, the content of which is incorporated herein by reference. In particular, the first liner layer may be an inner layer of the resulting folded object and the second liner layer may be an outer layer thereof.

For a multi-layered material comprising a first uncorrugated liner layer and a second uncorrugated liner layer joined to opposing outer surfaces of the corrugated layer, the second liner layer may be perforated along the fold line and/or the first liner layer may be indented or alternatingly indented and perforated along the fold line in order to facilitate the folding process even further. This applies in particular when a thickness of the first liner layer is smaller than a thickness of the second liner layer and/or wherein a bending stiffness according to ISO 5628 is lower for the first liner layer than for the second liner layer as explained above.

In particular, if the blank is configured to be folded into a packaging box, one of the two blank portions can be a side flap portion, preferably a short side flap portion and the other one can be a wall portion, wherein the contour of the blank in regions of the wall portion immediately adjacent the recessed contour portions is smoothly curved.

The wall portion may have in particular the form of a square, rectangle, trapezoid, triangle or other polygon with at least some rounded edges. The side flap portion may e.g. be rectangular or trapezoidal.

The side flap portion may have a flap length extending in parallel to the folding line of between 20 mm and 500 mm, in particular between 50 mm and 300 mm. According to some embodiments, the flap length may be approximately 50 mm, 60 mm, 100 mm, 150 mm, 180 mm, 200 mm, 250 mm or 300 mm.

The invention is also directed to folded objects, in particular to folded boxes, wherein the object is made from a blank according to the invention as described above.

In particular, the folded box can have at least one curved side wall and/or at least one rounded edge. The rounded edge may have a curvature radius of e.g. from 5 mm to 150 mm.

In certain preferred embodiments, the box is a wraparound box.

In the following, the invention will be explained in more detail by way of some exemplary embodiments illustrated in the accompanying figures and by the results of some experiments conducted by the inventors.
- Fig. 1: is a perspective view of a wraparound box folded from a conventional blank made from a multi-layered corrugated board material.
- Fig. 2: is a front view of the subject of Fig. 1.
- Fig. 3: is a front view of a similar conventional wraparound box illustrating the problem of incorrect folding.
- Fig. 4: is a top view of a part of a blank according to an embodiment of the invention.
- Fig. 5: is a cross-sectional view of a multi-layered board material.
- Fig. 6: illustrates the bending capability of the material shown in Fig. 5.
- Fig. 7: is a perspective view of a part of a blank according to an embodiment of the invention in an unfolded state.
- Fig. 8: is a perspective view of a part of a wraparound box folded from the blank shown in Fig. 7.
- Fig. 9: is a top view of a blank according to an embodiment of the invention.
- Fig. 10: is a top view of a blank according to a further embodiment of the invention.
- Fig. 11: is a top view of a number of samples simulating packaging flaps as used in experiment I described below.
- Fig. 12: is a series of photos taken of sample F as shown in Fig. 11 during experiment I for different bending angles.
- Fig. 13: is a series of photos taken of sample D as shown in Fig. 11 during experiment I for different bending angles.
- Fig. 14: is a top view of a number of samples simulating packaging flaps as used in experiment III described below.
- Figs. 15-18: are series of photos taken of each sample as shown in Fig. 14 during experiment III for different bending angles.

It is noted that for reasons of legibility, not all features of the embodiments or samples are provided with reference signs in the figures but primarily those that are necessary or useful in the discussion of the respective figure. This applies in particular in case of several identical features figuring in the same drawing in which not all these features are necessarily provided with a reference sign .

Figures 1 and 2 show different views of a conventional wraparound box 2 folded from a conventional blank 10 that is made from a multi-layered cardboard material, the blank 10 comprising four rectangular wall portions 11 forming a top wall 2t, a bottom wall 2b and two side walls 2s of the box 2.

Each wall portion 11 is joined to two opposed flap portions 12, the flap portions 12 of the four different wall portions on one side jointly forming a front wall 2f of the box 2, those on the other side jointly forming a rear wall 2r of the box 2.

Usually, the blank 10 is cut from a multi-layered corrugated cardboard material so that the side edges 6s of the box 2 joining the top, bottom and side walls to each other are oriented perpendicular to a flute direction F, i.e. the direction of the corrugated pipes of the material as indicated by a double arrow in the Figures, whereas the front edges 6f and the rear edges 6r are oriented along the flute direction F.

As described above, folding a multi-layered corrugated material exactly along the flute direction F can be difficult. As illustrated in Fig. 3, even with a small deviation of the actual folding line from the flute direction, e.g. with α = 2° skew in the folding, the flaps 12 can begin to protrude visibly beyond the sides of the box and/or the entire folded object 2 can become visibly crooked or skew.

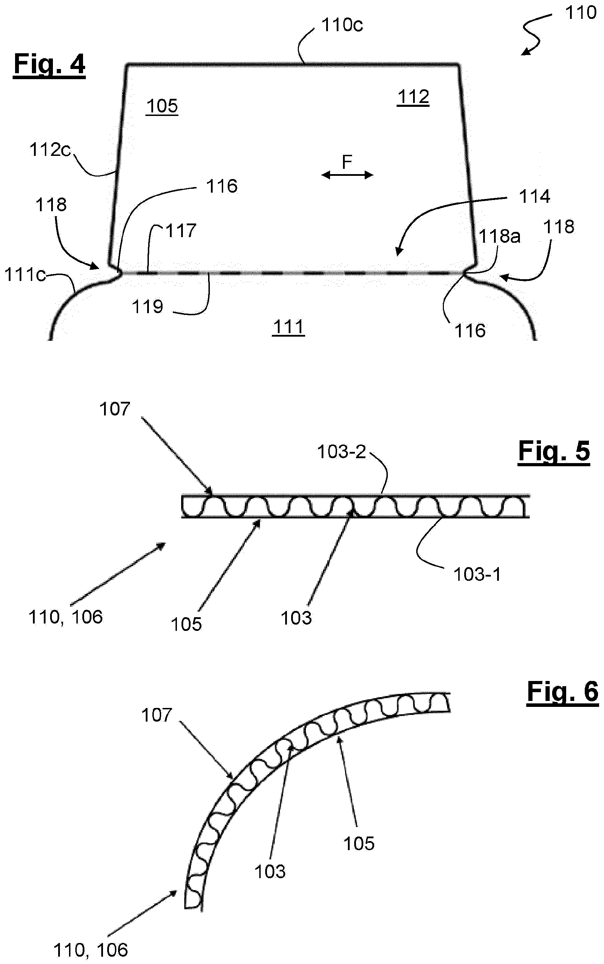

In order to address this problem, the inventors propose a blank 110 as illustrated by way of example in Fig. 4. The blank 110 comprises two blank portions 111, 112 joined to each other by a straight fold line 114 extending along the flute direction F of the material and ending in two fold line end points 116.

According to the invention, the blank 110 comprises two recessed contour portions 118, each recessed contour portion 118 comprising one of the end points 116 and extending on both sides of the fold line 114, i.e. into the region of both blank portions 111, 112.

The board material is weakened along the fold line 114, e.g. by perforations 117 and/or a score line 119. In particular, a weakened portion of the fold line can extend over at least 50% of the fold line, e.g. by regularly spaced perforations, or it can extend over substantially the entire fold line, e.g. by an indented score line extending over the entire fold line.

In the recessed contour portions 118, the blank contour 110c is visibly recessed with respect to the adjoining contour parts, in the illustrated example with respect to the adjoining straight contour portion 112c on the side of the blank portion 112 and with respect to the adjoining curved contour portion 111c on the side of the blank portion 111.

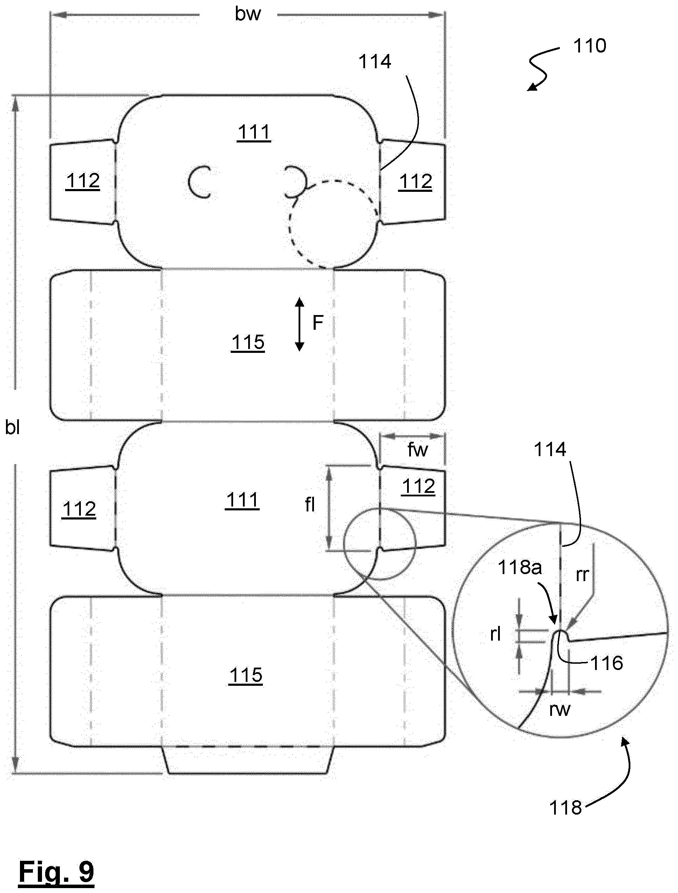

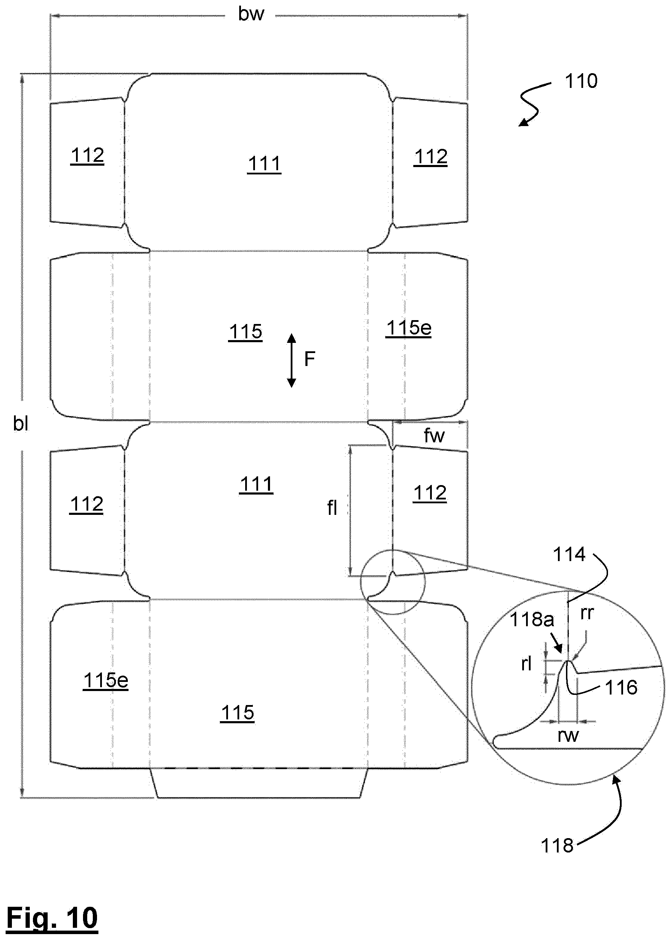

The recessed contour portions 118 can be provided as cutouts or notches and can in particular have a wedge form with a rounded apex region 118a as illustrated in Fig. 4 as well as in the detail enlargements in Figs. 9 and 10.

Furthermore, the recessed contour portions 118 can be formed symmetrically to each other and/or symmetrically to the fold line 114.

As illustrated in the cross-sectional view of Fig. 5, the blank 110 is made from a multi-layered board material 106 comprising a corrugated layer 103 defining a flute direction F perpendicular to the drawing plane of Fig. 5. An uncorrugated first liner layer 105 may be joined to a first surface 103-1 of the corrugated layer 103. Optionally, the material 106 can also comprise a second liner layer 107 being joined to a second surface 103-2 of the corrugated layer.

According to some embodiments, a thickness of the first liner layer 105 can be smaller than a thickness of the second liner layer 107 and/or a bending stiffness according to ISO 5628 may be lower for the first liner layer than for the second liner layer so that the material 106 can be smoothly bent as illustrated in Fig. 6 and described in more detail in WO 2013/012362 A1, the content of which is herein incorporated by reference. In particular, an Arcwise^{™} material can be used. The three constituent layers used in the board construction are matched in such a way that the material creates a smooth curvature upon bending in contrast to regular corrugated board material that creates a hinge upon bending of the material.

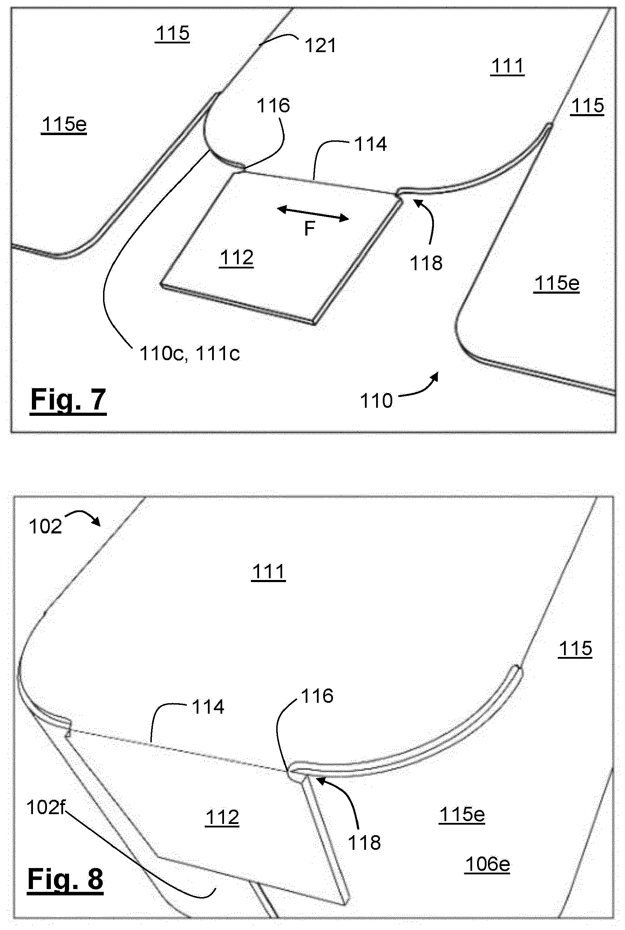

Fig. 7 shows a larger part of the blank 110 of Fig. 4 in a perspective view and Fig. 8 shows a perspective view of a part of the wraparound box 102 folded from the blank 110 of Fig. 7.

In this example, the blank portion 112 is a short side flap portion and the blank portion 111 is a top wall portion wherein the contour 110c of the blank 110 in regions of the top wall portion immediately adjacent the recessed contour portions 118 is smoothly curved (the contour portion is referred to as 111c in Fig. 4).

Two sidewall portions 115 are joined to the blank portion 111 by fold lines 121 extending perpendicular to the flute direction F. The sidewall portions 115 have extension portions 115e configured to form a front wall 102f and smoothly rounded edge regions 106e of the resulting box 102 as shown in Fig. 8.

The recessed contour portions 118 act as a crease guide ensuring that the blank 110 can be correctly and precisely folded along the desired fold line 114.

Figures 9 and 10 show different examples of blanks according to embodiments of the invention configured to form wraparound boxes with four smoothly curved edges similar to that shown in Figures 7 and 8. It is noted that Figures 9 and 10 are not drawn to the same scale.

The smaller blank of Fig. 9 is made from an E-flute material with a corrugated layer having a flute height of 1/16 inch and the larger blank of Fig. 10 is made from a B-flute material with a corrugated layer having a flute height of 1/8 inch.

As indicated in the figures, each of these blanks 110 has an overall blank length bl extending in parallel to the flute direction F and an overall blank width bw extending perpendicular to the flute direction F.

At the end points 116 of the folding lines 114 between the blank portions 111 configured to form the top wall and bottom wall of the resulting wraparound box and the adjoining blank portions 112 configured to form the short side flaps of the box, the blanks 110 are provided with pairs of recessed contour portions 118 as described above acting as crease guides for those edges extending in parallel with the flute direction F of the material.

As visible from the detail enlargements of Figs. 9 and 10, the recessed contour portions 118 have a roughly wedge-shaped form with a rounded apex portion 118a having a curvature radius rr. The recessed contour portions 118 have a recess length rl along the direction of the folding line 114 or the flute direction F and a recess width rw perpendicular to the direction of the folding line 114. The numerical values of the different parameters described above are summarized in the following table.

| | Fig. 9 | Fig. 10 |
|---|---|---|
| flute type | E (flute height 1.0-1.8 mm) | B (flute height 2.2-3.0 mm) |
| blank length (\|\| F) bl | 523 mm | 978 mm |
| blank width (⊥ F) bw | 302 mm | 564 mm |
| flap length (\|\| F) fl | 66 mm | 177 mm |
| flap width (⊥ F) fw | 50 mm | 101 mm |
| recess length (\|\| F) rl | 3 mm | 6 |
| recess width (⊥ F) rw | 4 mm | 8 |
| recess radius rr | 2 mm | 2 |

A number of laboratory tests were conducted to evaluate the new concept.

### Experiment I

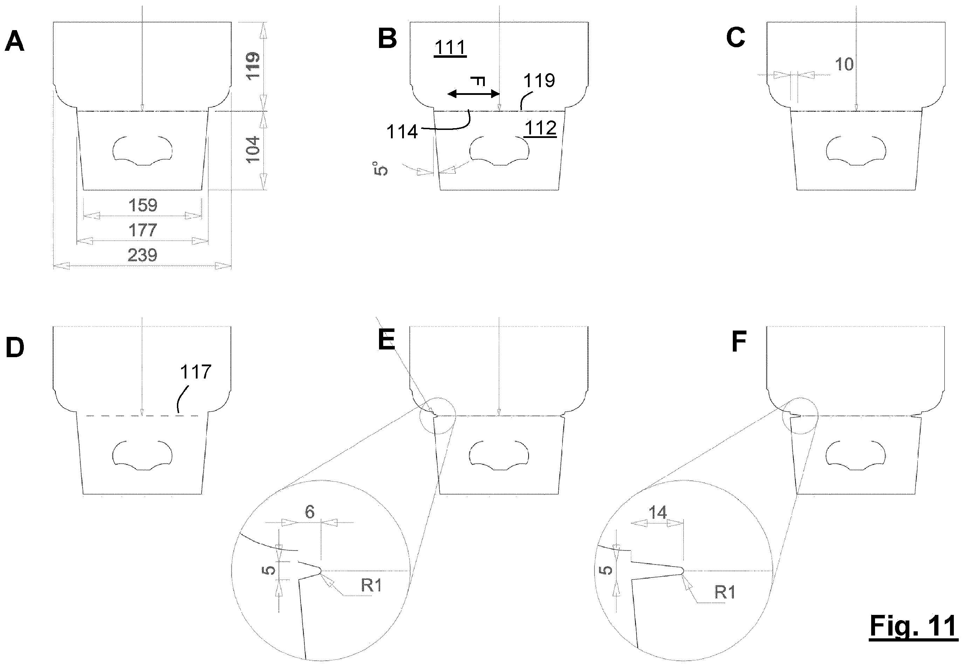

Samples A-F simulating a flap as illustrated in Fig. 11 were manufactured from a multi-layered board material with the following specifications:

| | |
|---|---|
| outer liner layer | coated Kraft liner of 160 g/m² |
| corrugated layer | recycled fluting of 115 g/m² |
| inner liner layer | coated mechanical pulp paper of 51 g/m² |

The corrugated board is a B-flute corrugated board having a wave length of 6.5 mm and a flute height of about 2.6 mm. The thickness of the multi-layered board including the corrugated board layer and the two liner layers is about 2.9 mm.

The dimensions of the two blank portions 111, 112 (cf. sample B) are the same for all specimen A-F and are indicated for sample A in Fig. 11 in mm. In all samples, the folding line 114 extends along the flute direction F.

Therefore, the samples A-F only differ in the treatment of the material in the region of the folding line 114.

Samples A-D are conventional examples without the recessed contour portions or notches proposed by the present invention, whereas the blank contour of samples E-F is provided with recessed contour portions in the form of wedge-shaped cutouts having a semi-circular apex region.

In all samples, the inner liner layer is provided with a score line extending along the folding line 114, wherein the samples differ in the type of score line used.

A common score line type is the cut/crease type. This score line type combines cuts and creases. For example cut/crease 10/10 used in this test for samples A-C and E-F means that the score line has a 10 mm cut line followed by a 10 mm crease line (indentation) repeated along the full length of the score line. The cut parts of the score line extend through all layers of the material, i.e. through the inner liner layer, the corrugated middle layer and the outer liner layer. Along the crease parts of the score line, the inner liner layer is indented and the corrugated layer is compressed. In the present experiment, the outer liner layer is left unaffected by the crease parts of the score line, but if a matrix is used, sometimes also the outer liner layer may be indented along the crease parts. A perforation is similar to the cut/crease but instead of using a crease line between the cuts, the perforation has just a gap or bridge between the cuts, i.e. it leaves the corrugated board unaffected between the cuts so that only the cuts weaken the board along the score line. This can be used to avoid cracks made by the crease line on the inner liner. In this test a score type perforation 10/10 mm was used for sample D and that means a 10 mm cut followed by a 10 mm gap. In Fig. 11, the indented crease part 119 of the score line is marked by a dotted line, the cut or perforated part 117 by a dashed line.

The specifications of the different samples are summarized in the table below.

| | A | B | C | D | E | F |
|---|---|---|---|---|---|---|
| recessed contour portions? | no | no | no | no | yes rl = 6mm rw = 5 mm rr = 1mm | yes rl = 14mm rw = 5 mm rr = 1mm |
| type of score line of inner liner layer | cut/crease 10/10 (start and finish with a crease) | cut/crease 10/10 (start and finish with a cut) | cut/crease 10/10 (start and finish with a curved cut) | perforation 10/10 (start and finish with a bridge) | cut/crease 10/10 (start and finish with a crease) | cut/crease 10/10 (start and finish with a crease) |

Tests were carried out by clamping one side of the respective specimen. The top surface was supported by a plate to prevent it from deforming. The flap was subjected manually to a vertical force causing the specimen to fold in the crease region. The samples were visually examined and rated with respect to their ability to create a distinct hinge in the crease region in the range from 1 (complete failure) to 5 (ideal results) with the option to note tendencies upward (+) or downward (-).

The results are summarized in the following table:

| Results of Experiment I | |
|---|---|
| Crease Configuration | Rating of Fold performance |
| A | 3- |
| B | 4- |
| C | 3 |
| D | 2 |
| E | 4+ |
| F | 5 |

It is evident that the samples with recessed contour portions can be folded more exactly and that in particular configuration F works a lot better than the conventional samples.

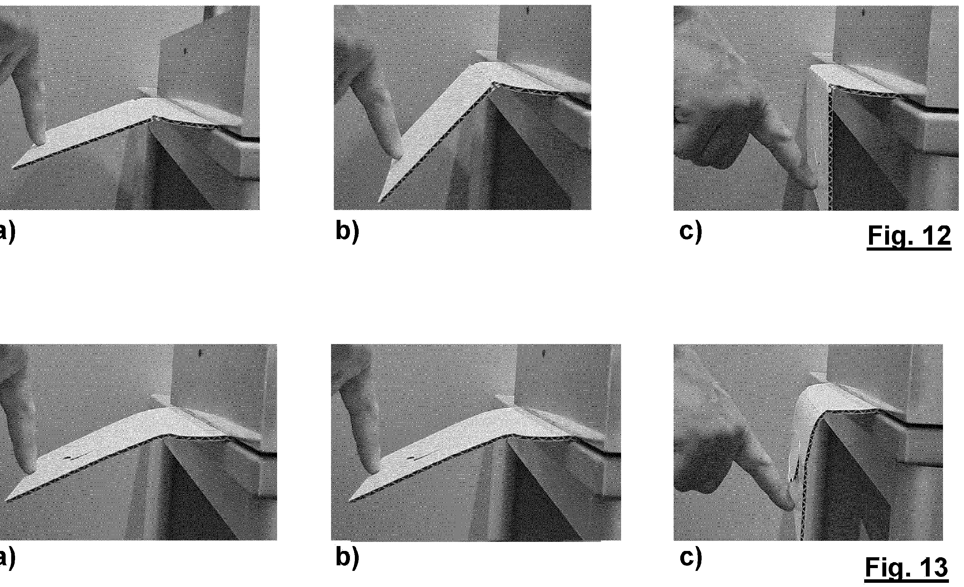

This is also illustrated by photos of the experiment with bending angles of 20° (a), 45° (b) and 90° (c) for sample F in Fig. 12 and sample D in Fig. 13 which clearly show that for the sample F with recessed contour portions, a folded object with well-defined sharp edges can be achieved whereas for sample D, trying to bend the flap portion by 90° results in a curved folding rather than a sharp 90° edge.

### Experiment II

Experiment I was repeated for a new set of samples A-F which only differ from those of experiment 1 in that the score line on the inner liner layer has no indented part, i.e. is only perforated or cut. Only reference samples A and D are completely identical to that of experiment I.

The results of the new experiment II are summarized below.

| Results of Experiment II | |
|---|---|
| Crease Configuration | Rating of Fold performance |
| A (reference) | 3 |
| B | 2 |
| C | 2 |
| D (reference) | 2 |
| E | 3 |
| F | 4+ |

It is evident that for the conventional samples, the performance deteriorates in comparison to experiment I, whereas for the samples with recessed contour portions, the result is almost as good as in experiment I.

Overall, it has been observed in this investigation that a crease concept with wedge shape cut-outs on both ends of the folding line combined with a cut/crease score creates the optimal ability to create distinct fold-line for a flap on a corrugated board.

Furthermore, for samples with the recessed contour portions as proposed in this application, an indented crease score on the inner liner layer can even be omitted without significantly deteriorating the results.

### Experiment III

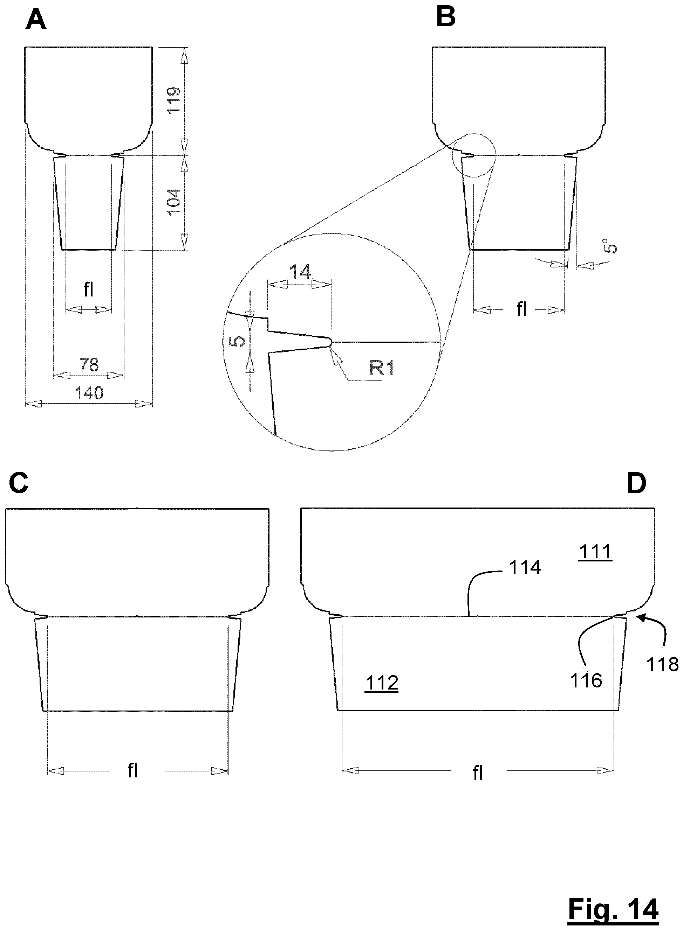

Finally, a new set of samples, two of each configuration A-D were prepared as illustrated in Fig. 14, all samples being made from the same material as in experiment I and having a pair of wedge shape cut-outs on both ends of the folding line combined with a crease score on the inner liner layer and a line of perforations on the outer liner layer, the samples A-D only differing in their flap length fl, i.e. in the length of the folding line 114 which was varied between 50 mm (A) and 300 mm (D). The remaining dimensions of samples A-D including the dimensions of the recessed contour portions 118 are identical and are indicated for samples A and B in mm in Fig. 14.

Then, the samples were tested in the same manner described above with respect to experiment I.

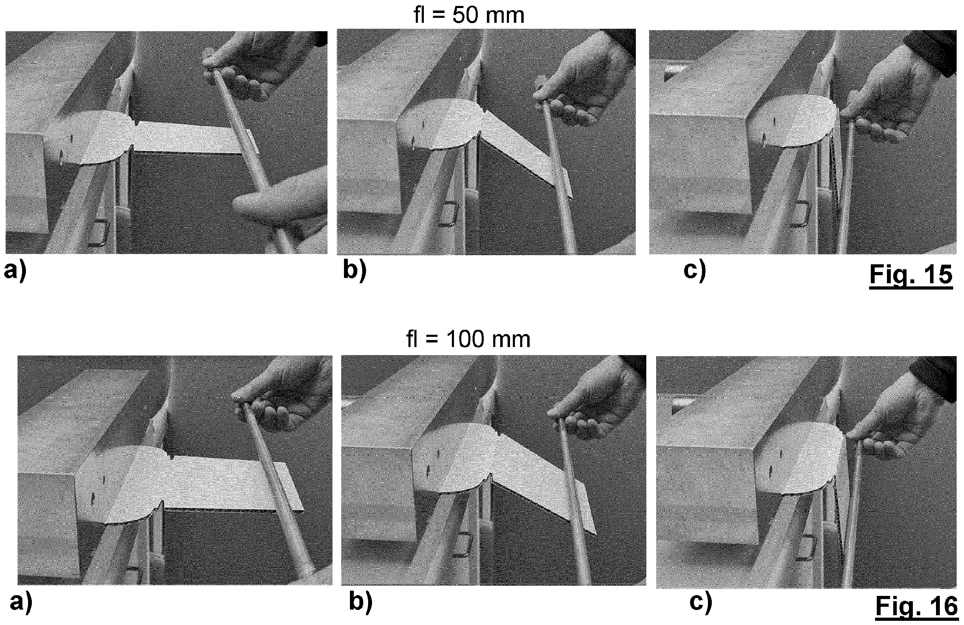

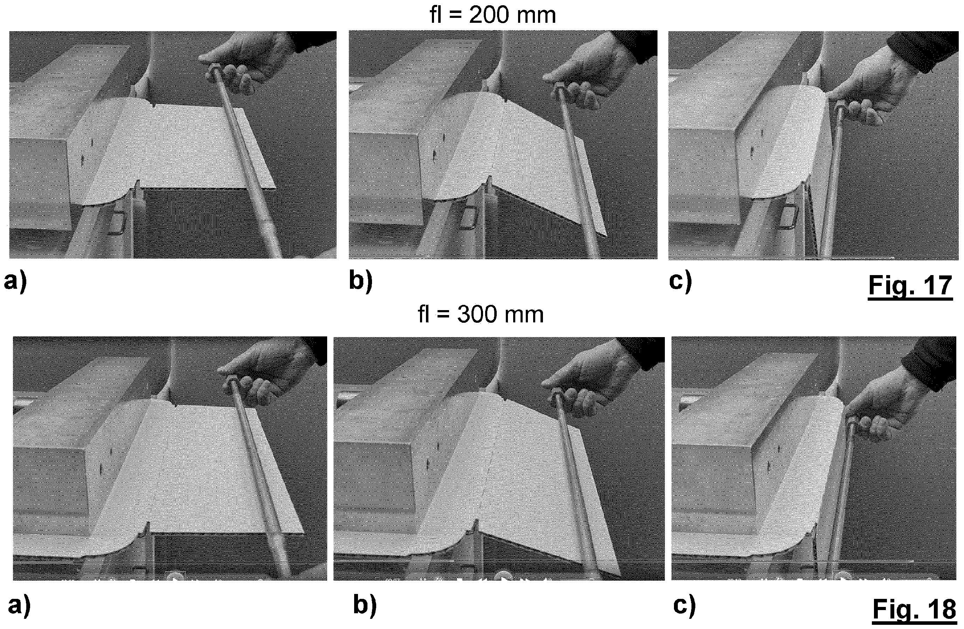

Photos of these experiments are provided in Figs. 15-18 and the results can be summarized as follows:

| Results of Experiment III | | |
|---|---|---|
| Crease Configuration | flap length | Rating of Fold performance |
| A | 50 mm | 5 |
| B | 100 mm | 5 |
| C | 200 mm | 5 |
| D | 300 mm | 5 |

It is noticed in this investigation that the crease configuration having wedge-shaped cut-outs with a semi-circular apex region on both ends of the folding line performs equally well for short flap lengths (50 mm) as well as for long flap lengths (300 mm).

The crease configuration performed over-all very well and managed to create distinct fold-lines.

## Claims

1. A continuous blank (110) for forming a folded object (102),
wherein the blank (110) is made from a multi-layered board material (106) comprising a corrugated layer (103) defining a flute direction (F);
the blank (110) comprising two blank portions (111, 112) joined to each other by a straight fold line (114) extending along the flute direction (F) and having two opposed fold line end points (116), the multi-layered board material (106) being weakened along the fold line (114);
**characterized in that** a contour (110c) of the blank (110) comprises two recessed contour portions (118), each recessed contour portion (118) comprising one of the end points (116) and extending on both sides of the fold line (114).

2. The blank (110) according to claim 1, wherein the multi-layered board material (106) furthermore comprises an uncorrugated first liner layer (105) being joined to a first surface (103-1) of the corrugated layer (103), wherein the first liner layer (105) is weakened along the fold line (114), preferably by an indented score line (119).

3. The blank (110) according to claim 1 or 2,
wherein the blank (110) is configured to be folded into a packaging box (102), the first liner layer (105) preferably being an inner liner layer configured to form an interior surface of the packaging box (102).

4. The blank (110) according to any of the preceding claims,
wherein the two recessed contour portions (118) are arranged and formed symmetrically to each other, and/or wherein at least one of the two recessed contour portions (118) is symmetric with respect to the fold line (114).

5. The blank (110) according to any of the preceding claims, wherein at least one of the recessed contour portions (118) is wedge-shaped and preferably has a rounded apex region (118a)

6. The blank (110) according to any of the preceding claims, wherein a recess width (rw) perpendicular to the fold line (114) of each recessed contour portion (118) is not larger than 10 mm.

7. The blank (110) according to any of the preceding claims,
wherein at least one of the two recessed contour portions (118) has a curve radius (rr) at the associated fold line end point (116) of between 0.8 mm and 2.5 mm, preferably of about 2 mm.

8. The blank (110) according to any of the preceding claims,
wherein at least one of the two recessed contour portions (118) has a recess length (rl) extending parallel to the fold line (114) and a recess width (rw) extending perpendicular to the fold line (114) in a plane defined by the blank (110) in an unfolded state, wherein the recess length (rl) is from 2 mm to 15 mm, preferably from 3 mm to 6 mm and/or wherein the recess width (rw) is from 3 mm to 8 mm.

9. The blank (110) according to any of the preceding claims,
wherein at least one of the two recessed contour portions (118) has a recess length (rl) extending parallel to the fold line (114) and a recess width (rw) extending perpendicular to the fold line (114) in a plane defined by the blank (110) in an unfolded state, wherein a ratio (rl:rw) of the recess length (rl) to the recess width (rw) is between 3:1 to 3:5, preferably approximately 3:4.

10. The blank (110) according to any of the preceding claims,
wherein at least one of the two recessed contour portions (118) has a recess length (rl) extending parallel to the fold line (114), wherein a ratio of the recess length (rl) to a flute height of the corrugated layer (103) is between 1.6 and 6.5, preferably between 1.8 and 2.2, more preferably approximately 2.

11. The blank (110) according to claim 2 or claim 2 in combination with any of claims 3 to 10, wherein the multi-layered material (106) further comprises an uncorrugated second liner layer (107) joined to a second surface (103-2) of the corrugated layer (103), wherein a thickness of the first liner layer (105) is smaller than a thickness of the second liner layer (107) and/or wherein a bending stiffness according to ISO 5628 is lower for the first liner layer (105) than for the second liner layer (107).

12. The blank (110) according to any of the preceding claims, wherein one (112) of the two blank portions (111, 112) is a side flap portion, preferably a short side flap portion and the other one (111) is a wall portion, wherein the contour (110c) of the blank (110) in regions of the wall portion immediately adjacent the recessed contour portions (118) is smoothly curved.

13. Folded packaging box (102) made from a blank (110) according to one of the preceding claims.

14. Box (102) according to claim 13, wherein at least one side wall of the box (102) is curved and/or at least one edge of the box is rounded.

15. Box (102) according to claim 13 or claim 14, wherein the box is a wraparound box.
